# EUROPEAN PATENT APPLICATION

(11) **EP 4 738 045 A1**
(43) Date of publication of application: **06.05.2026**
(21) Application number: 24210978.3
(22) Date of filing: 05.11.2024
(51) Int. Cl.: G05D 16/06

(54) **FLUID REGULATOR VALVE AND REFRIGERATION SYSTEM COMPRISING A FLUID REGULATION VALVE**

(71) Applicant: Danfoss A/S, 6430 Nordborg (DK)
(72) Inventor: Rasmussen, Jens Erik, Nordborg (DK); Bunsuz, Orkun Safa, Nordborg (DK)
(74) Representative: Patentanwälte Olbricht Buchhold Keulertz

(57) **Abstract**

The invention relates to a fluid regulator valve comprising an inlet port and an outlet port for connecting the valve to a fluid system, a regulating mechanism for opening and closing a valve opening within an inner valve chamber between the inlet port and the outlet port, wherein the regulating mechanism comprises a diaphragm provided in a diaphragm chamber, a valve rod and a control element. According to the invention, a pressure balancing conduit with two conduit portions is provided between the diaphragm chamber and an outlet port surface of the outlet port, wherein the pressure balancing conduit comprises a chamber opening and a port opening, the two openings opening into the diaphragm chamber and the outlet port, respectively. The invention also relates to a refrigeration system with a fluid regulator valve.

## Description

The invention relates to a fluid regulator valve comprising an inlet port and an outlet port for connecting the valve to a fluid system, a regulating mechanism for opening and closing a valve opening within an inner valve chamber between the inlet port and the outlet port, wherein the regulating mechanism comprises a diaphragm provided in a diaphragm chamber, a valve rod and a control element. According to the invention, a pressure balancing conduit with two conduit portions is provided between the diaphragm chamber and an outlet port surface of the outlet port, wherein the pressure balancing conduit comprises a chamber opening and a port opening, the two openings opening into the diaphragm chamber and the outlet port, respectively. The invention also relates to a refrigeration system with a fluid regulator valve.

Known fluid regulator valves may comprise pressure balancing conduits which are arranged such that they connect a diaphragm chamber to an inner valve chamber of the valve. Due to the pressure and fluid flow conditions present in the inner valve chamber, only limited and/or time delayed pressure balancing of the valve diaphragm chamber can occur in such known valves.

The aim of the present invention is to provide an improved fluid regulator valve and an improved refrigeration system, which overcome this limitation and provide improved pressure balancing characteristics. This aim is achieved by a fluid regulator valve according to claim 1 and a refrigeration system according to claim 10. Advantageous embodiments of the invention are subject to the dependent claims.

According to claim 1, a fluid regulator valve is provided, comprising an inlet port and an outlet port for connecting the valve to a fluid system. The two ports may be arranged at an angle to each other, such that they are not aligned coaxially to each other. The valve comprises a regulating mechanism for opening and closing a valve opening within an inner valve chamber between the inlet port and the outlet port, wherein the regulating mechanism comprises a diaphragm provided in a diaphragm chamber, a valve rod and a control element. According to the invention, a pressure balancing conduit with two conduit portions is provided between the diaphragm chamber and an outlet port surface of the outlet port, wherein the pressure balancing conduit comprises a chamber opening and a port opening, the two openings opening into the diaphragm chamber and the outlet port, respectively. The term outlet port may be understood in a broad sense and may comprise any structures, surfaces and hollow portions relevant to establishing a fluid connection between the valve and an outlet conduit. The term outlet port surface may be understood in a broad sense and may refer to a plane of the outlet port, which is perpendicular to the fluid flow direction at the outlet port. The outlet port surface may hence be understood to be a part of the outlet port. In the case of a circular outlet port, the outlet port surface may refer to a circular plane defining the outlet port cross section.

The port opening is thus provided in an area of the valve with flow and pressure conditions, which significantly differ from the conditions within the inner valve chamber, thereby maximizing the pressure balancing effect of the pressure balancing conduit.

In a preferred embodiment of the invention, the two conduit portions are angled, preferably at a right angle, with respect to each other, wherein preferably a first conduit portion is oriented in parallel to the valve rod. Alternatively, the two conduit portions may be oriented coaxially with respect to each other. In this alternative, the two conduit portions may be formed by a single preferably cylindrical hole in the valve housing. In both variants, the pressure balancing conduit may be provided in a position between the valve rod and the outlet port, thus facilitating the pressure balancing connection between the outlet port and the diaphragm chamber.

In another preferred embodiment of the invention, the two conduit portions are drilled into a housing of the valve or the valve rod from two different directions or the two conduit portions may be drilled into a housing of the valve or the valve rod from a single direction or one of the conduit portions is drilled into the housing and the other conduit portion is a bent tube. The bent tube may be partially inserted into the first conduit portion to form the entire pressure balancing conduit.

In another preferred embodiment of the invention, the port opening is oriented in parallel to the outlet port. The port opening and the outlet port may be positioned such that they face the same direction. The outlet port may refer to any structures relevant for providing a fluid conduit for fluid flowing out of the valve.

In another preferred embodiment of the invention, the outlet port comprises a preferably circular outlet port surface through which the port opening penetrates. The outlet port surface may be a contact portion for connecting and/or abutting a fluid conduit connected to the valve and providing a fluid low path from the inside of the valve to other components of a refrigeration system. The outlet port surface may be shaped such that the port opening leads into the fluid conduit.

In another preferred embodiment of the invention, the inner valve chamber has a smaller diameter than the outer diameter of the outlet port surface and/or the valve chamber extends less in a vertical direction than the outlet port surface. The vertical direction of the valve may be defined as the direction parallel to the direction in which the valve rod is movable. Correspondingly, the horizontal direction may be defined as perpendicular to the direction in which the valve rod is movable.

In another preferred embodiment of the invention, the outlet port surface is offset from the inner valve chamber preferably towards the regulating mechanism. In an embodiment with a circular outlet port surface, the centre of the outlet port surface may thus be positioned closer to the regulating mechanism or more precisely closer to the diaphragm chamber than the inner valve chamber or a central portion of the inner valve chamber. This arrangement may help minimizing the size of the relevant features and therefore the size of the entire valve.

In another preferred embodiment of the invention, the valve comprises two springs acting on the valve rod and/or the control element from opposing directions, wherein a first spring is provided within the inlet port and preferably provides a fluid flow path through the spring.

In another preferred embodiment of the invention, the port opening is arranged above the valve chamber and between the valve chamber and the diaphragm chamber. In particular, the port opening may be arranged between a step, which is situated at the transition between the valve chamber to the outlet port surface, and the diaphragm chamber.

The invention also pertains to a refrigeration system comprising a fluid regulation valve according to any of the preceding claims, wherein the fluid regulation valve is provided for regulating the flow of a heat transfer fluid of the refrigeration system.

Further details and advantages of the invention are described with reference to the embodiments shown in the figures. The figures show:
- Figs. 1a, 1b:: sectional views of the housing of two embodiments of the fluid regulator valve;
- Fig. 2:: sectional view of a part of the valve according to another embodiment;
- Fig. 3:: sectional view of the housing of a state of the art fluid regulator valve;
- Fig. 4a: sectional view of a similar type of fluid regulator valve;
- Fig. 4b: sectional view of a fluid regulator valve; and
- Fig. 5:: refrigeration system comprising the fluid regulation valve.

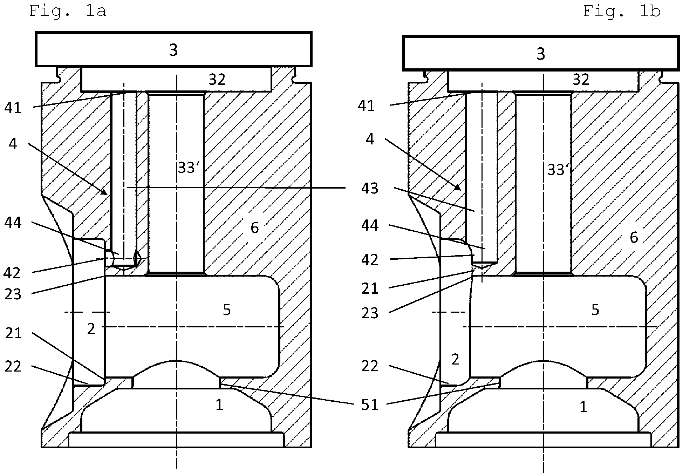

Figures 1a and 1b show a sectional view of the housing 6 of a first embodiment of the fluid regulator valve. The fluid regulator valve comprises an inlet port 1 and an outlet port 2 for connecting the valve to a fluid system. The fluid system is not shown in the figures, but it may be e.g. a refrigeration system, wherein the fluid regulator valve regulates the flow of a heat transfer fluid through the refrigeration system.

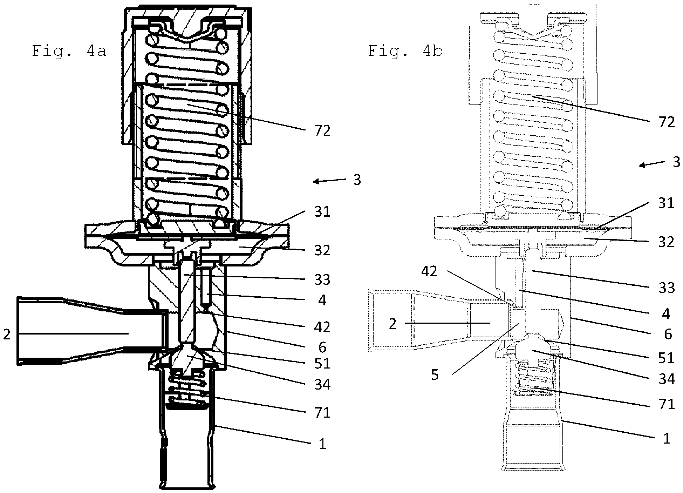

The two ports 1, 2 are arranged at a right angle to each other. However, any suitable angle may be chosen, preferably with the exception of parallel ports 1, 2, which are aligned coaxially to each other. The valve comprises a regulating mechanism 3 with a diaphragm chamber 32 and a valve rod passage 33' opposite the bottom port 1, for opening and closing a valve opening 51 within an inner valve chamber 5 between the inlet port 1 and the outlet port 2. The regulating mechanism 3 is only shown in a schematic way in figures 1a and 1b and is shown in more detail in figures 4a and 4b. The valve rod passage 33' may be aligned coaxially with the inlet port 1 and/or may be oriented at a right angle with respect to the outlet port 2.

A pressure balancing conduit 4 with two conduit portions 43, 44 is provided between the diaphragm chamber 32 and an outlet port surface 21 of the outlet port 2. The pressure balancing conduit 4 may be positioned in the vicinity of the outlet port surface 21 and does not have to be at exactly the same place as the outlet port surface 21. The outlet port 2 is provided for connecting the valve to a fluid conduit, wherein the fluid conduit is not shown in the figures. The size and/or outer diameter of the outlet port surface 21 may be selected such that the fluid conduit contacts a preferably radially outer portion of the outlet port surface 21 when connected to the valve.

The pressure balancing conduit 4 comprises a chamber opening 41 and a port opening 42, the two openings 41, 42 opening into the diaphragm chamber 32 and the outlet port 2, respectively. The pressure balancing conduit 4 creates a fluid connection between the area close to the outlet port surface 21 and the inside of the diaphragm chamber 32. This fluid connection enables pressure propagation between said portions, thereby enabling the working of the regulating mechanism 3.

The port opening 42 is provided in an area of the valve close to the outlet port 2 and the fluid conduit connected to it. Here, flow and pressure conditions differ significantly from the conditions within the inner valve chamber 5.

According to the embodiment of figure 1a, the two conduit portions 43, 44 of the pressure balancing conduit 4 are angled, preferably at a right angle, with respect to each other, wherein preferably a first conduit portion 43 is oriented in parallel to the valve rod passage 33'. More generally, the first conduit portion 43 may extend in a direction from the diaphragm chamber 32 towards the outlet port 2 and/or the inner valve chamber 5. Here, the first conduit portion 43 may have a larger cross sectional area and preferably a larger diameter, than the corresponding dimension of the second conduit portion 44. Both conduit portions 43, 44 may be drilled into the housing 6 and fluidly connect to each other at the ends of their respective bore holes.

Alternatively and according to the embodiment of figure 1b, the two conduit portions 43, 44 of the pressure balancing conduit 4 may be oriented coaxially with respect to each other. In this alternative, the two conduit portions 43, 44 may be formed by a single preferably cylindrical bore hole in the valve housing 6. The pressure balancing conduit 4 may be offset from the rod passage 33' such that it intersects with the plane in which the outlet port surface 21 is provided. The outlet port 2 and the pressure balancing conduit 4 may be formed as two cylindrical portions. In order to provide a fluid connection between the outlet port surface 21 and the diaphragm chamber 32, these two cylindrical portions may be arranged such that they intersect close to or at the outlet port surface 21, thereby providing a fluid connection between the outlet port surface 21 and the diaphragm chamber 32.

In both variants, the pressure balancing conduit 4 may be provided in a position between the valve rod passage 33' and the outlet port 2, thus facilitating the pressure balancing connection between the outlet port 2 and the diaphragm chamber 32.

The two conduit portions 43, 44 of the pressure balancing conduit 4 may be drilled into a housing 6 of the valve from two different directions or the two conduit portions 43, 44 may be drilled into a housing 6 of the valve from a single direction, especially in the case of the embodiment shown in figure 1b.

As shown in the embodiment of figure 1a, the port opening 42 may be oriented in parallel to the outlet port 2. In the case of a cylindrical port opening 42, the central axis of the port opening 42 may hence be perpendicular to the outlet port surface 21. This means that the port opening 42 and the outlet port 2 may be positioned such that they face the same direction.

The outlet port 2 may comprise a preferably circular outlet port surface 21 through which the port opening 42 penetrates. The outlet port surface 21 may be a contact portion for connecting and/or abutting a fluid conduit connected to the valve and providing a fluid flow path from the inside of the valve to other components of a refrigeration system. The outlet port surface 21 may be shaped such that the port opening 42 leads into this fluid conduit. The outlet port surface 21 may be dimensioned large enough to fully contact the fluid conduit and/or the outlet port surface 21 may be surrounded by a protruding outlet port cylindrical wall 22 for contacting the outer circumference of the fluid conduit.

The inner valve chamber 5 may have a smaller diameter than the outer diameter of the outlet port surface 21 and/or the valve chamber 5 may extend less in a vertical direction than the outlet port surface 21. The vertical direction of the valve may be defined as the direction parallel to the valve rod passage 33' and may correspond to the vertical direction in the figures. Correspondingly, the horizontal direction may be defined as perpendicular to the direction in which the valve rod passage 33' extends.

The outlet port surface 21 may be offset from the inner valve chamber 5 preferably towards the regulating mechanism 3. This means that the central axes or central planes of the outlet port surface 21 and the inner valve chamber 5 may be spaced apart from each other in the vertical direction.

In an embodiment with a circular outlet port surface 21, the centre axis of the outlet port surface 21 may thus be positioned closer to the regulating mechanism 3 or more precisely closer to the diaphragm chamber 32 than the inner valve chamber 5 or a central portion of the inner valve chamber 5. This arrangement may help minimizing the size of the relevant features and therefore the size of the entire valve.

The port opening 42 may also be arranged above the valve chamber and in particular between the valve chamber 5 and the diaphragm chamber 32. In particular, the port opening 42 may be arranged between, on the one side, a step 23, which is situated at the transition between the inner valve chamber 5 to the outlet port surface 21, and, on the other side the diaphragm chamber 32. The port opening 42 may be positioned above and away from the inner valve chamber 5.

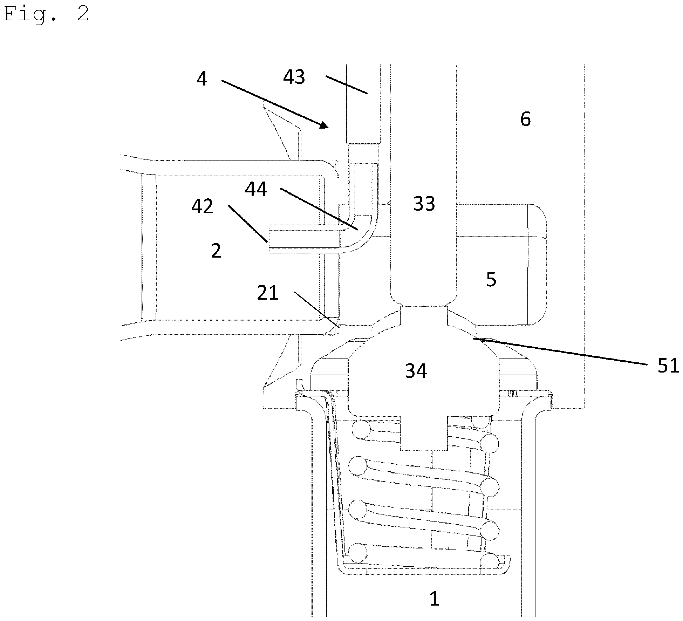

Figure 2 is a sectional view of a part of the valve according to another embodiment. The main characteristic and difference of this embodiment is that the pressure balancing conduit 4 comprises two distinct portions: A first portion corresponds to the first conduit portion 43 and is formed integrally with the structure of the housing 6 as in the previous embodiments. The second portion corresponds to the second conduit portion 44 but differs from the previous embodiments in that it is not formed integrally with the housing 6. Rather, in this embodiment the second conduit portion 44 is a separate conduit which is a distinct component from the housing 6 but is fluidly connected to the housing 6. Here, the second conduit portion 44 may be provided in the form of a tube, preferably a bent tube, which is partially inserted into the first conduit portion 43 at one of the tube's ends. The other of the tube's ends protrudes from the plane of the outlet port surface 21 and into the outlet port 2.

The tube and therefore the port opening 42 may be extended into the port 2 such that the port opening 42 is located at an advantageous position, at which the pressure and flow conditions are such that they improve the pressure balancing between the port opening 42 and the chamber opening 41. The chamber opening 41 is not shown in figure 2 but is present at a similar position to the one shown in figures 1a and 1b.

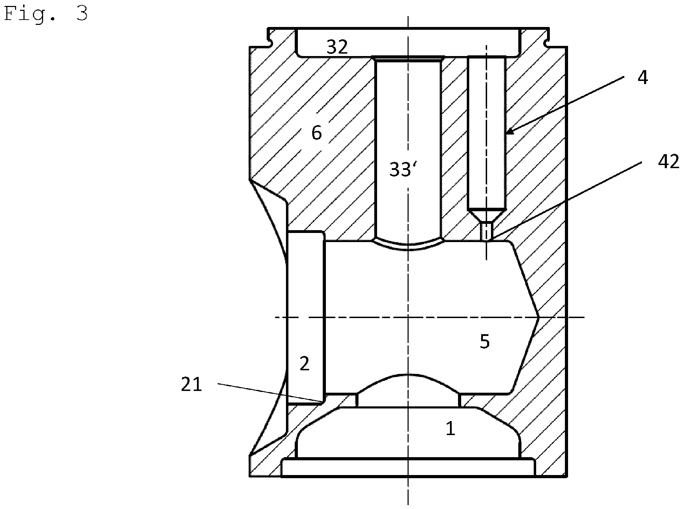

Figure 3 is a sectional view of the housing of a state of the art fluid regulator valve. According to the state of the art, a pressure balancing conduit 4 is typically provided at a different position and therefore fluidly connects different portions of the valve, namely the diaphragm chamber 32 to the inner valve chamber 5 rather than to the outlet port 2. According to the known solutions, the valve rod passage 33' is hence positioned between the outlet port 2 and the pressure balancing conduit 4. Additionally, in the known state of the art valves, the port opening 42 of the pressure balancing conduit 4 is typically oriented towards the inlet port 1, rather than aligned in parallel with the outlet port 2, as is the case with the present invention.

Figure 4a shows a sectional view of a similar type of fluid regulator valve. Here, the regulating mechanism 3 is shown in more detail. The regulating mechanism 3 may correspond the regulating mechanism 3 of the present invention with no or negligible differences between them other than the arrangement of the pressure balancing conduit 4.

The regulating mechanism 3 comprises a diaphragm 31 provided in the diaphragm chamber 32, a valve rod 33 and a control element 34. The valve rod 33 may push against the control element 34 to open the valve opening 51. The valve rod 33 is provided within the valve rod passage 33' of the housing 6.

The valve may comprise two springs 71, 72 acting on the valve rod 33 and/or on the control element 34 from opposing directions, wherein a first spring 71 is provided within the inlet port 1 and preferably provides a fluid flow path through the spring 71. A second spring 72 is provided on a side of the valve opposite the inlet port 1. The second spring 72 may be provided for pushing against the diaphragm 31. The diaphragm 31 may in return contact the valve rod 33 such that the second spring 72 and the diaphragm 31 may act upon the valve rod 33 and by extension on the control element 34.

The control element 34 is provided between the valve rod 33 and the first spring 71, such that it may be actuated and/or positioned by the valve rod 33, the first spring 71 and the pressure in the diaphragm chamber 32. The valve may be typically provided such that the spring forces exerted by the springs 71, 72 alone are balanced so as to keep the valve open, i.e. to keep the control element 34 at a distance from the valve opening 51. The pressure level in the diaphragm chamber 32 may determine the exact position of the control element 34 with respect to the valve opening 51, i.e. the opening degree of the valve.

The two ports 1, 2 are shown to comprise extended conduit portions connected to the valve housing 6. The features of the two ports 1, 2 may be understood in a broad sense and may refer to any structures used for connecting the inside of the valve to some external refrigeration system.

Figure 4b is a sectional view of the fluid regulator valve, comprising a variant of the pressure balancing conduit 4 as shown in more detail in figure 1a. The pressure balancing conduit 4 can alternatively be provided in the form shown in figure 1b. The general function of the regulating mechanism 3 corresponds to the regulating mechanism 3 described above with reference to figure 4a.

In figures 4a and 4b the port openings 42 are situated at different positions with regard to the housing 6. According to the embodiment of the valve shown in figure 4b, the port opening is situated outside the inner valve chamber 5. The port opening 42 is provided at the outlet port 2 and facing the fluid conduit connected to the valve. Here, flow and pressure conditions differ significantly from the conditions within the inner valve chamber 5. In particular, the static pressure at the port opening 42 is lower than within the valve chamber 5. This increases the opening degree of the valve, especially at higher fluid velocities, providing more favourable control of the corresponding refrigeration system.

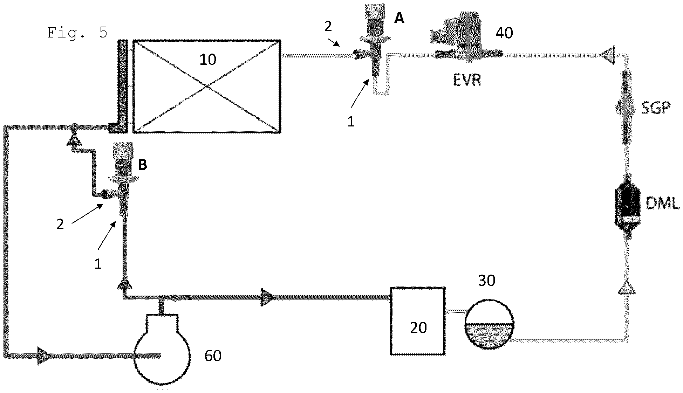

Figure 5 shows an example of a refrigeration system comprising the presently described fluid regulation valve. The fluid regulation valve may be provided for regulating the flow of a heat transfer fluid of the refrigeration system and may be fluidly connected to the remainder of the refrigeration system via the two ports 1, 2. In the embodiment of figure 5, two valves A, B are shown with their respective ports 1, 2. A first valve A is provided as a regulating valve for regulating the flow into the evaporator 10, the other valve B functions as a bypass valve between the compressor 60 and the evaporator 10.The refrigeration system may further comprise a condenser 20, a receiver 30, a filter/dryer DML, a sight glass SGP and/or a solenoid valve 40 provided between the compressor 60 and the regulating valve A.

## Claims

1. Fluid regulator valve comprising an inlet port (1) and an outlet port (2) for connecting the valve to a fluid system, a regulating mechanism (3) for opening and closing a valve opening (51) within an inner valve chamber (5) between the inlet port (1) and the outlet port (2), wherein the regulating mechanism (3) comprises a diaphragm (31) provided in a diaphragm chamber (32), a valve rod (33) and a control element (34), **characterized in that** a pressure balancing conduit (4) with two conduit portions (43, 44) is provided between the diaphragm chamber (32) and an outlet port surface (21) of the outlet port (2), wherein the pressure balancing conduit (4) comprises a chamber opening (41) and a port opening (42), the two openings (41, 42) opening into the diaphragm chamber (32) and the outlet port (2), respectively.

2. Fluid regulator valve according to claim 1, **characterized in that** two conduit portions (43, 44) are angled, preferably at a right angle, with respect to each other, wherein preferably a first conduit portion (43) is oriented in parallel to the valve rod (33) or that the two conduit portions (43, 44) are oriented coaxially with respect to each other.

3. Fluid regulator valve according to any of the previous claims, **characterized in that** the two conduit portions (43, 44) are drilled into a housing (6) of the valve or the valve rod (33) from two different directions or that the two conduit portions (43, 44) are drilled into a housing (6) of the valve or the valve rod (33) from a single direction or that one of the conduit portions (43) is drilled into the housing (6) and the other conduit portion (44) is a bent tube.

4. Fluid regulator valve according to any of the previous claims, **characterized in that** the port opening (42) is oriented in parallel to the outlet port (2).

5. Fluid regulator valve according to any of the previous claims, **characterized in that** the outlet port (2) comprises a preferably circular outlet port surface (21) through which the port opening (42) penetrates.

6. Fluid regulator valve according to any of the previous claims, **characterized in that** the inner valve chamber (5) has a smaller diameter than the outer diameter of the outlet port surface (21) and/or that the valve chamber (5) extends less in a vertical direction than the outlet port surface (21).

7. Fluid regulator valve according to any of the previous claims, **characterized in that** the outlet port surface (21) is offset from the inner valve chamber (5) preferably towards the regulating mechanism (3).

8. Fluid regulator valve according to any of the previous claims, **characterized in that** the valve comprises two springs (71, 72) acting on the valve rod (33) and/or the control element (34) from opposing directions, wherein a first spring (71) is provided within the inlet port (1) and preferably provides a fluid flow path through the spring (71).

9. Fluid regulator valve according to any of the previous claims, **characterized in that** the port opening (42) is arranged above the valve chamber (5) and between the valve chamber (5) and the diaphragm chamber (32).

10. Refrigeration system comprising a fluid regulation valve according to any of the preceding claims, wherein the fluid regulation valve is provided for regulating the flow of a heat transfer fluid of the refrigeration system.
